# NEW EUROPEAN PATENT SPECIFICATION

(11) **EP 0 562 890 B2**
(45) Date of publication and mention of the opposition decision: **25.11.2009**
(45) Mention of the grant of the patent: 14.06.2000
(21) Application number: 93302420.0
(22) Date of filing: 29.03.1993
(51) Int. Cl.: H04W 88/02, H04B 7/26

(54) **Mobile communication network with remote updating of subscriber identity modules in mobile terminals**
Mobiles Kommunikationsnetzwerk mit Fernaktualisierung der Teilnehmerkennungsmodule in mobilen Endgeräten
Réseau de communication mobile avec actualisation à distance des modules d'identité des participants dans des terminaux mobiles

(30) Priority: 27.03.1992 GB 9206679
(43) Date of publication of application: 29.09.1993
(73) Proprietor: ORANGE PERSONAL COMMUNICATIONS SERVICES LIMITED, Almondsbury, Bristol BS12 4QJ (GB)
(72) Inventor: Green, Steven, Thornbury Bristol BS12 1BP (GB)
(74) Representative: Spaargaren, Jerome

(56) References cited:
- EP-A1- 0 459 065
- EP-A1- 0 459 344
- US-A- 5 046 082

## Description

The present invention relates to a mobile terminal for telecommunications, for example a portable telephone, and to a communications network making use of such terminals.

The use of mobile telephones is now increasing, and it is therefore increasingly desirable that the operation of a given mobile telephone is sufficiently adaptable for the user's needs.

At present,many mobile telephones, particularly those based on the Groupe Speciale Mobile (GSM) Standards, contain an electronic module, known as a Subscriber Identity Module or SIM which stores data to be used by the mobile telephone. The SIM is pre-configured to contain a unique identifier for a particular user, and may also contain appropriate authentication functions. The SIM is also able to store temporary data such as paging messages and a telephone number directory.

Currently, the SIM has a purely passive function within the mobile telephone, and stores data only. Apart from the temporary data, the software configuration of the SIM is entirely pre-determined by the organisation which supplies the SIM, which is normally the operator of the mobile communications network, or its appointed agent, in order that a given SIM may be configurated according to the needs of a particular user. The disadvantage with this is that if the needs of the user change, the user must return the SIM to the supplier of the SIM, for re-configuration or a new SIM to be issued to the user. In the former case, the user is without a SIM for a period during which he is unable to use the services of the network, thus resulting in inconvenience for himself and loss of revenue to the network operator. In the latter case security risks arise with the user being potentially in possession of two SIM's both relating to his single subscription to the supplier.

US-A-5046082 discloses a mobile (cellular) telephone which is capable of being updated remotely. To carry out such updating, the host system of the mobile telephone generates a unique identifying signal which is identified by the mobile telephone and switches the mobile telephone into a mode which permits data to be changed. It can be noted that the mobile telephone of US-A-5046082 does not operate accordingly to GSM standards and does not have a SIM therein.

EP-A-459065 discloses a mobile telephone operating according to GSM standards which is arranged to program remotely on 'empty' SIM. Once the SIM has been programmed, the data therein cannot be changed.

The present invention is set out in the appended claims.

Hence, the supplier may signal remotely to the SIM (which is straightforward since the SIM is located within a mobile telephone) and enables the supplier to change the functions of the SIM without the SIM having to be removed from the telephone.

Thus, according to the present invention, operations which previously required the removal of the SIM from the mobile terminal, and its return to, or replacement by, the supplier, now may be achieved remotely. Of course, the SIM may be removed from any given mobile terminal and transferred to another mobile terminal, so that the user may transfer his use from one mobile terminal to another. Hence, the transfer of the SIM re-configures the mobile terminal according to the needs of the user. However, with the present invention, the configuration of the SIM itself may be changed according to changes in the needs of the user in any mobile terminal in which the SIM is located and which is arranged to embody the present invention.

It can be noted that it is believed that existing SIMs have sufficient memory to permit suitable software to be stored therein in order to achieve the present invention. However, it may be desirable to enhance the memory available in order to enhance the processing capability within a SIM for the invention to be facilitated, although any such enhancement must keep within the appropriate standards for the mobile terminal, e.g. the GSM standard.

An embodiment of the present invention will now be described in detail, by way of example, with reference to the accompanying drawings in which:
Fig. 1 shows a communication network in which the present invention may be embodied;
Fig. 2 is a flow chart showing the processing of a message by a SIM incorporating the present invention; and
Figs. 3a to 3c show the structure of messages which may be used in the present invention.

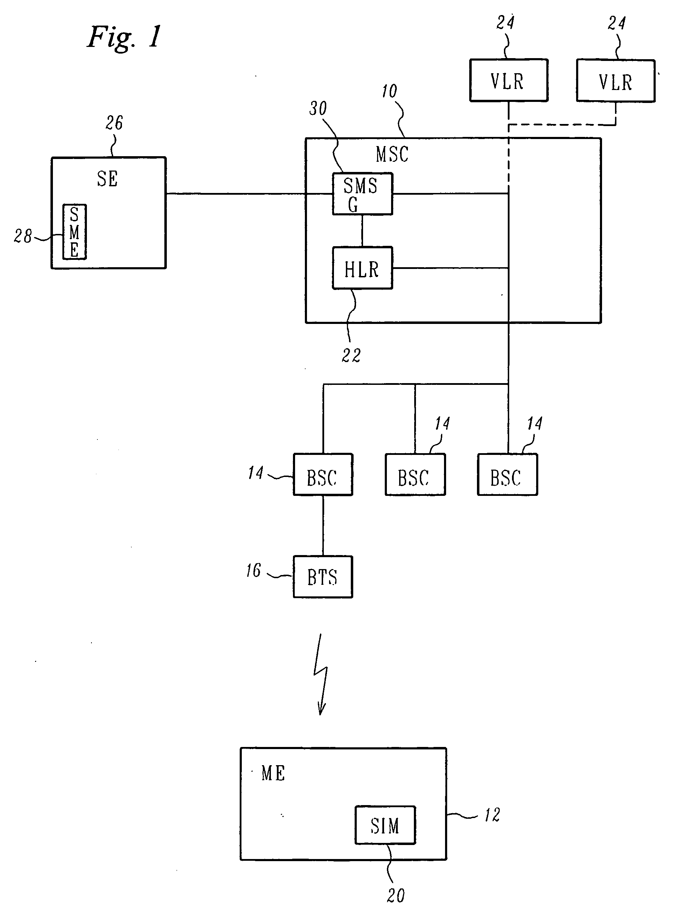

In Fig. 1 normal telephonic communication occurs between a switching network including a mobile switching center MSC 10 and a mobile telephone or other mobile equipment ME 12. Such communication is via one of a number of base station controllers BSC 14, each of which control a number of radio cells in which the ME 12 is located, and communicate with the ME 12 via a base transceiver system BTS 16.

The ME 12 contains a subscriber identity module or SIM 20 which stores pre-programmed data. A mobile equipment ME containing a SIM may be referred to as a Mobile Station MS or mobile Telephone. In particular, the SIM 20 stores a unique identifier of a particular user, and may also contain an authentication function.

Thus, when the SIM 20 is located in a given ME 12, the ME 12 is configured for use by the information in the SIM.

Immediately at the start of communication between the MSC 10 and the ME 12, the MSC checks whether the user is registered at the MSC itself, via a home location register HLR 22. If no match is found, the MSC 10 checks on one of a number of visitor location registers 24 which contain information used when a user is temporarily within the coverage of a MSC which is not the "home" MSC of the user.

In existing networks, it is possible to store a message in the SIM 20 of an ME 12. To do this, the supplier generates the message at a service center SC 26 of the switching network using part of the service center 26 known as a short message entity SME 28. The supplier therefore inputs the message via the SME 28 and the service center 26 transmits the message to the MSC 10 via a gateway SMSG 30 in the MSC 10. The message is then transmitted from the MSC 10 in the normal way to the ME 12, via the appropriate BSC 14 and BTS 16, and the message is stored in the SIM 20 of the ME 12. In practice, the ME 12 merely acts as a transferor of the message, and the message is passed to the SIM 20 in the form it was received from the MSC 10. The only function of the ME 12 in this operation is as a buffer. In currently defined practice, the only function of the message is to provide information to the user of the telephone via a textual display on the telephone. The message may thus be read, edited by the user, and sent to another user, or erased.

As described so far the system is conventional. As has previously been mentioned, the SIM 20 contains information identifying a particular user, and constraining that user to perform certain functions of the ME 12, and not others. This information is pre-programmed in the SIM 20. Thus, to take a simple case, the user may be prevented from making international calls, with appropriate data being stored in the SIM 20. However, if the user wants to change the functions available to him, he must return the SIM to the supplier for re-programming or request the issue of a new SIM. This imposes a delay on the changes in function which is undesirable, as well as creating security risks with the presence of two SIMs for one user subscription.

Therefore, the present invention proposes that the SIM 20 contain software which permits the SIM 20 to re-configure itself, in response to a suitable signal thereby changing the functions which it permits for the ME 12 in which it is located, and enables the SIM 20 to verify its changes with the network. The whole process of SIM reconfiguration and verification is done transparently to the user who may continue to use the telephone for normal calls, whilst the reconfiguration/verification process is happening. The process is also independent of the type of ME 12 and, as long as the ME 12 supports the GSM short message service, it can respond to a signal generated at the SME 28.

Thus, if the user wishes to change the functions available to him, he notifies the supplier accordingly and the supplier arranges, via the service center 26, for a suitable signal to be stored in the network, either at the service center 26, or the MSC 10. The MSC immediately tries to send a short message to the ME, without waiting for the ME to be activated. If this fails, due to the ME being switched off, the MSC will keep trying for a predetermined period, until successful otherwise, the next time the user uses the network, by activation of the ME 12, the MSC identifies such use by noting the unique identifier of the user associated with SIM 20, and immediately sends a signal to the ME 12 which causes the SIM 20 to re-configure itself according to the newly desired functions. Hence, very rapidly, the SIM 20 may perform the new functions requested by the user. Having re-configured itself, the SIM 20 carries out a verification process to ensure that the new configuration corresponds to that requested by the user. Verification involves the SIM 20 carrying out certain mathematical processes on its reconfigured data, comparing the results of this with the expected results as received from the network and advising the network of a satisfactory conclusion.

The re-configuration and verification process will now be described in detail. In the following description, it is assumed that the SIM is pre-programmed with standard or default commands, and all data stored has been initialised to known initial values. These operations will normally be carried out before the SIM 20 is issued to the user, by a suitable initialisation step. That initialisation step may also program PINs and other data such as the International Mobile Subscriber Identity (IMSI) data, the authentication key (Ki) data and the Pin Unblocking Key (PUK) data into the SIM.

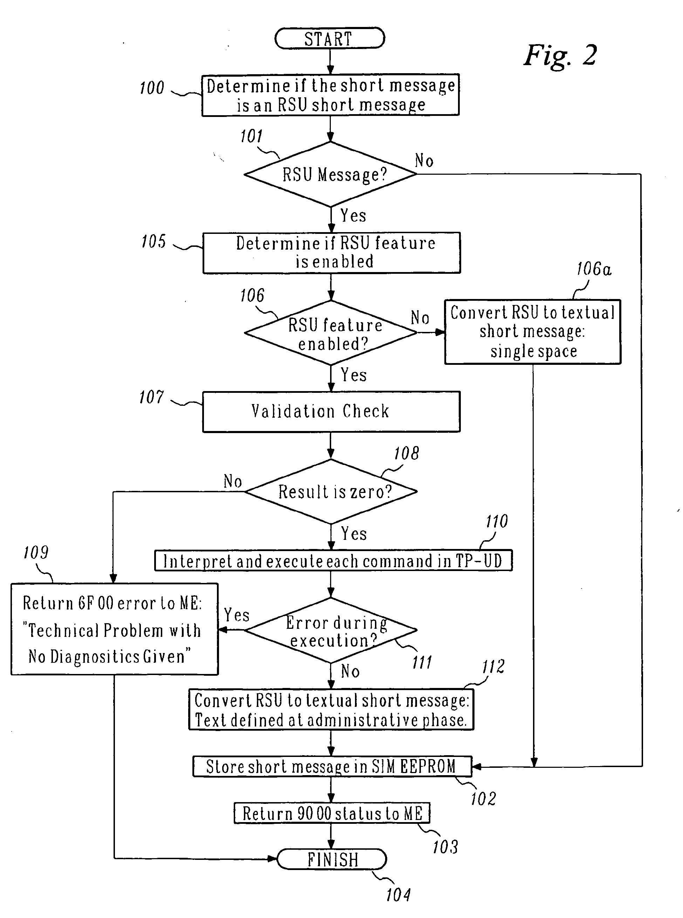

Now suppose that a message is received by the SIM 20. This message may be a re-programming message, or it could be a conventional message which is stored at the SIM 20 and displayed to the user as previously described. Therefore, as shown in Fig. 2, the first step 100 when a message is received is to determine if the message is a remote SIM updating (RSU) message. If the message is not an RSU message, processing branches at step 101 to step 102, in which the message is stored in a suitable memory, such as a EEPROM of the SIM 20. The.SIM 20 may then signal to the ME 12 that the message has been received, and this may be achieved at step 103 by returning a suitable status signal to the ME 12. With the message stored in the memory of the SIM 20, the processing stops at step 104, and the message may be displayed subsequently, with the display being triggered by a suitable input from the user.

If the message is determined to be an RSU message, branching at step 101 passes to step 105, in which the SIM 20 checks whether the updating function is enabled. This function will normally be enabled, but may be disabled for a particular SIM if that SIM is to be excluded from being updated according to the present invention. If it is disabled, the processing branches at step 106 to step 106a at which the message is converted to a textual message and processing then jumps to step 102, for display of the message as previously described.

If the RSU feature is enabled, however, the next step after the branching of step 106 is to carry out a check that the message has been received correctly. The present invention is not limited to any particular validation check method, but a simple method is to make use of checksum data in the message. In this arrangement, every message contains, in addition to other necessary information, checksum data which, when the information in the message is summed according to a predetermined rule, produces a zero result. Therefore, if the information is summed at validation step 107, and the result is not zero, the message has been received incorrectly. Thus, if the result of that validation check is not zero, processing branches at step 108 to step 110 in which a signal is generated from the SIM 20 to the ME 12 which indicates that there was a problem in the transmission of the RSU message. The SC 26 may then re-transmit the RSU message. If, however, the validation check of step 107 produces a zero result, processing branches at step 108 to step 109 in which the RSU message is analysed by the SIM to execute each command in the message. If, during the processing of step 110, an error occurs, processing branches at step 111 back to step 109, and the error is signalled to the SC 26 so that the RSU message is retransmitted. If every command is executed correctly, processing branches at step 111 to step 112 in which a message is generated to confirm that the processing of the RSU message has been completed. The message is stored in the memory of the SIM 20 in step 102.

Thus, it is possible to generate signals to the SIM 20 from the SC 26 which can cause the SIM to carry out specific commands. Each RSU message will therefore contain a series of commands, plus a checksum. The number of commands in the RSU message depends on the size of each command and is limited by the maximum size of the message function of the SIM 20.

The processing of the commands received by the SIM, after the checking process described with reference to Fig. 2 has been carried out, will now be described. As previously mentioned, each RSU message contains a series of commands plus a checksum. The first command in such a series has a security checking function, which will be described in more detail later. The other commands are those which update the SIM 20 in accordance with the present invention. Data is stored in a SIM in one of a plurality of fields, and there are two types of such fields. The first type is known as a "binary" field and consists of a single block of data, with the data within that block being unformatted (unstructured). An example of such data is the IMSI data referred to previously. The other type of field is a formatted field, and is a structured field consisting of a number of records, normally with a similar structure. In this embodiment of the present invention, the command carries new data to be overwritten into an appropriate binary or formatted field, together with data identifying that field. Thus, once the SIM 20 has confirmed that an appropriate RSU message has been received, using the processing of Fig. 2, then each command is processed by overwriting the data contained within that command into a field (either binary or formatted) identified within that command.

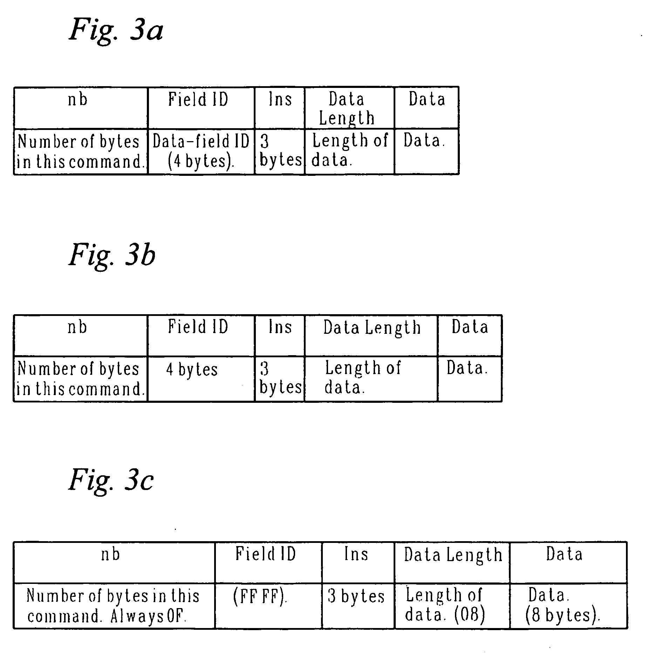

Fig. 3a shows the structure of a command for updating a binary field. As can be seen from Fig. 3a, the command has five elements. The first element nb is a coded representation of the total number of bytes (and hence the length) of the command. The second element is an identifier of the field in which the data is to be written. The third element is a coding element Ins, and then the length of data is identified. Finally, the data itself is carried within the command. Thus, the field into which the data carried by the command is stored in the Field ID element, and, once the field is identified, the data can be stored therein using standard processing operations known e.g. from the pre-configuration process.

Fig. 3b is a structure of a command for updating formatted data, it can be seen that the structure is effectively identical to that for updating a binary field.

As previously mentioned, the first command in a RSU message has a special function, in that it carries out a verification check, as previously mentioned, the updating function involves overwriting data in to one or more fields of the memory of the SIM 20, but for security such overwriting of the memory should occur only when the operator of the mobile communication network instructs such updating. Therefore, this embodiment proposes that the first command in the RSU message be a verifying command, the structure of which is shown in Fig. 3c. The general structure of this command is similar to that for updating the binary or record data, and consists of five separate elements. In fact, the data of this command is not to be written to a field, the Field ID data may be null. The data of this command then represents a code which is compared with a pre-recorded code within the SIM to act as validation.

Thus, each RSU message first enables access to the memory fields of the SIM by interaction of the validation command of Fig. 3c with an internal code of the SIM 20, and their successive commands can update binary and formatted fields by overwriting of data within the command into the appropriate field. Hence, the SIM can be updated remotely, and thus the network features available to the user of the ME 12 can be varied.

It may be noted that SIM 20 is normally removable from the ME 12 and is interchangeable amongst mobile terminals. Thus, the user is not limited to a particular terminal, provided he retains his own SIM 20.

It should also be noted that the conventional SIMs 20 contains sufficient memory space to store appropriate software, although that memory space has not previously been used for anything other than data storage of e.g. paging messages. However, in order that the existing functions of the SIMs 20 are not limited by the present invention, it may be necessary to increase the amount of memory space within the SIM 20, working within the limits imposed by the needs of the telecommunications network itself.

## Claims

1. A mobile communications network comprising at least one switching network (10, 26) and a plurality of GSM mobile terminals (12),
the at least one switching network (10) and each mobile terminal (12) being arranged to transmit signals therebetween,
each mobile terminal (12) having a memory (20) for containing data for controlling the transmission of signals from the corresponding mobile terminal (12) to the at least one switching network (10, 26),
the memory being a GSM subscriber identity module adapted to receive data signals from the network to the mobile terminal having predetermined formats including the GSM short message format and to reject other signals, the data signals including display signals in the GSM short message format for causing said mobile terminal to display a message,
**characterised in that**:
the switching network (10, 26) is arranged to transmit updating signals to at least one of said mobile terminals (12) which alter the data of the memory (20) of the at least one mobile terminal (12), said updating signals being in the GSM short message format; and
said subscriber identity module is arranged to distinguish between said updating signals and said display signals, and being arranged to cause said mobile terminal (12) to display messages corresponding to said display signals and to cause the data of the subscriber identity module (20) to be updated on the basis of said updating signals.

2. A network according to claim 1, wherein the mobile terminals (12) are mobile telephones.

3. A network according to claim 1 or claim 2, wherein each subscriber identity module (20) has a memory comprising a plurality of fields storing data, and each updating signal comprises information identifying one of those fields and information to be written into that one field, thereby altering said data.

4. A network according to any one of the preceding claims, wherein each subscriber identity module (20) is arranged to analyse each updating signal received to validate said updating signal prior to altering of the data of the subscriber identity module (20).

5. A method of operating a mobile communications network in which a plurality of GSM mobile terminals (12) and at least one switching network (10, 26) transmit signals therebetween, with the transmission of the signals from each terminal (12) to the at least one switching network (10, 26) being controlled by data in a memory within the corresponding terminal (12),
the memory being a GSM subscriber identity module adapted to receive data signals from the network to the mobile terminal having predetermined formats including the GSM short message format and to reject other signals, the data signals including display signals in the GSM short message format for causing said mobile terminal to display a message,
**characterised by**:
the at least one switching network (10, 26) transmitting updating signals to at least one of the terminals (12) which alter the data of the subscriber identity module of the at least one terminal (12), said updating signals being in the GSM short message format; and
said subscriber identity module distinguishing between said updating signals and said display signals, causing said mobile terminal (12) to display messages corresponding to said display signals, and causing the data of the subscriber identity module (20) to be updated on the basis of said updating signals.

## Patentansprüche

1. Mobiles Kommunikationsnetzwerk, umfassend zumindest ein Schaltnetz (10, 26) und eine Vielzahl von GSM-Mobilterminals (12),
wobei das zumindest eine Schaltnetz (10) und jeder Mobilterminal (12) zum Übertragen von Signalen zwischen ihnen angeordnet sind,
wobei jeder Mobilterminal (12) einen Speicher (20) aufweist zum Enthalten von Daten zum Steuern der Übertragung von Signalen vom entsprechenden Mobilterminal (12) zum zumindest einen Schaltnetz (10, 26),
wobei der Speicher ein GSM-Teilnehmerkennungsmodul ist, das so ausgebildet ist, dass es Datensignale vom Netzwerk zum Mobilterminal mit vorbestimmten Formaten, einschließlich dem GSM-Kurzbotschaftsformat, aufnimmt und andere Signale zurückweist, wobei die Datensignale Anzeigensignale im GSM-Kurzbotschaftsformat umfassen, die bewirken, dass der Mobilterminal eine Botschaft anzeigt,
**dadurch gekennzeichnet, dass**:
das Schaltnetz (10, 26) so ausgebildet ist, dass es zu zumindest einem der Mobilterminals (12) Aktualisierungssignale überträgt, die die Daten des Speichers (20) des zumindest einen Mobilterminals (12) ändern, wobei die Aktualisierungssignale im GSM-Kurzbotschaftsformat sind, und
das Teilnehmerkennungsmodul so ausgebildet ist, dass es zwischen den Aktualisierungssignalen und den Anzeigensignalen unterscheidet, und so ausgebildet ist, dass es bewirkt, dass der Mobilterminal (12) Botschaften anzeigt, die den Anzeigensignalen entsprechen, und bewirkt, dass die Daten des Teilnehmeridentitätsmoduls (20) auf Basis der Aktualisierungssignale aktualisiert werden.

2. Netzwerk nach Anspruch 1,
worin die Mobilterminals (12) Mobiltelefone sind.

3. Netzwerk nach Anspruch 1 oder 2,
worin jedes Teilnehmeridentitätsmodul (20) einen Speicher aufweist, der eine Vielzahl von Feldern umfasst, die die Daten speichern, und jedes Aktualisierungssignal Informationen umfasst, die eines dieser Felder identifizieren, und Informationen, die in dieses eine Feld zu schreiben sind, wodurch die Daten geändert werden.

4. Netzwerk nach einem der vorangegangenen Ansprüche,
worin jedes Teilnehmeridentitätsmodul (20) so angeordnet ist, dass es jedes empfangene Aktualisierungssignal analysiert, um das Aktualisierungssignal zu bewerten, bevor die Daten des Teilnehmeridentitätsmoduls (20) geändert werden.

5. Verfahren zum Betreiben eines mobilen Kommunikationsnetzwerkes, bei dem eine Vielzahl von GSM-Mobilterminals (12) und zumindest ein Schaltnetz (10, 26) Signale dazwischen übertragen, wobei die Übertragung der Signale von jedem Anschluss (12) zum zumindest einen Schaltnetz (10, 26) durch Daten in einem Speicher (20) innerhalb des entsprechenden Terminals (12) gesteuert wird,
wobei der Speicher ein GSM-Teilnehmerkennungsmodul ist, das so ausgebildet ist, dass es Datensignale vom Netzwerk zum Mobilterminal mit vorbestimmten Formaten, einschließlich dem GSM-Kurzbotschaftsformat, aufnimmt und andere Signale zurückweist, wobei die Datensignale Anzeigensignale im GSM-Kurzbotschaftsformat umfassen, die bewirken, dass der Mobilterminal eine Botschaft anzeigt,
**dadurch gekennzeichnet, dass**:
das Schaltnetz (10, 26) zu zumindest einem der Mobilterminals (12) Aktualisierungssignale überträgt, die die Daten des Teilnehmererkennungsmoduls des zumindest einen Mobilterminals (12) ändern, wobei die Aktualisierungssignale im GSM-Kurzbotschaftsformat sind; und
das Teilnehmerkennungsmodul zwischen den Aktualisierungssignalen und den Anzeigensignalen unterscheidet, bewirkt, dass der Mobilterminal (12) Botschaften anzeigt, die den Anzeigensignalen entsprechen, und bewirkt, dass die Daten des Teilnehmeridentitätsmoduls (20) auf Basis der Aktualisierungssignale aktualisiert werden.

## Revendications

1. Réseau de communications mobiles comprenant au moins un réseau de commutation (10, 26) et un certain nombre de terminaux mobiles GSM (12) ;
le au moins un réseau de commutation (10) et chaque terminal mobile (12) étant agencés pour transmettre des signaux entre eux,
chaque terminal mobile (12) ayant une mémoire (20) contenant des données pour contrôler la transmission de signaux du terminal mobile correspondant (12) au au moins un réseau de commutation (10, 26) ;
la mémoire étant un module d'identité d'abonné GSM adapté pour recevoir des signaux de données du réseau au terminal mobile ayant des formats prédéterminés comprenant le format de messages courts GSM et rejeter d'autres signaux, les signaux de données comprenant des signaux d'affichage dans le format de messages courts GSM pour amener ledit terminal mobile à afficher un message,
**caractérisé en ce que** :
le réseau de commutation (10, 26) est agencé pour transmettre des signaux de remise à jour à au moins l'un desdits terminaux mobiles (12) qui modifient les données de la mémoire (20) du au moins un terminal mobile (12), lesdits signaux de remise à jour étant dans le format de messages courts GSM ; et
ledit module d'identité d'abonné est agencé pour faire une distinction entre lesdits signaux de remise à jour et lesdits signaux d'affichage, et étant agencé pour amener ledit terminal mobile (12) à afficher des messages correspondant auxdits signaux d'affichage et pour amener la donnée du module d'identité d'abonné (20) à être remise à jour sur la base desdits signaux de remise à jour.

2. Réseau selon la revendication 1, dans lequel les terminaux mobiles (12) sont des téléphones mobiles.

3. Réseau selon la revendication 1 ou la revendication 2, dans lequel chaque module d'identité d'abonné (20) a une mémoire comprenant un certain nombre de champs mémorisant des données, et chaque signal de remise à jour comprend une information identifiant un de ces champs et une information à écrire dans ce champ, modifiant de la sorte lesdites données.

4. Réseau selon l'une quelconque des revendications précédentes, dans lequel chaque module d'identité d'abonné (20) est agencé pour analyser chaque signal de remise à jour reçu pour valider ledit signal de remise à jour avant de modifier les données du module d'identité d'abonné (20).

5. Procédé de fonctionnement d'un réseau de communications mobiles dans lequel un certain nombre de terminaux mobiles GSM (12) et au moins un réseau de commutation (10, 26) transmettent des signaux entre eux, avec la transmission des signaux de chaque terminal (12) au au moins un réseau de commutation (10, 26) étant contrôlée par des données dans une mémoire (20) dans le terminal correspondant (12) ;
la mémoire étant un module d'identité d'abonné GSM adapté pour recevoir des signaux de données du réseau au terminal mobile ayant des formats prédéterminés comprenant le format de messages courts GSM et rejeter d'autres signaux, les signaux de données comprenant des signaux d'affichage dans le format de messages courts GSM pour amener ledit terminal mobile à afficher un message,
**caractérisé par**
le au moins un réseau de commutation (10, 26) transmettant des signaux de remise à jour à au moins l'un des terminaux (12) qui modifient les données du module d'identité d'abonné du au moins un terminal (12), lesdits signaux de remise à jour étant dans le format de messages courts GSM ; et
ledit module d'identité d'abonné faisant une distinction entre lesdits signaux de remise à jour et lesdits signaux d'affichage, amenant ledit terminal mobile (12) à afficher des messages correspondant auxdits signaux d'affichage, et amenant les données du module d'identité d'abonné (20) à être remises à jour sur la base desdits signaux de remise à jour.
